# EUROPEAN PATENT APPLICATION

(11) **EP 2 116 709 A1**
(43) Date of publication of application: **11.11.2009**
(21) Application number: 08155929.6
(22) Date of filing: 08.05.2008
(51) Int. Cl.: F02D 41/20, G01K 3/10, G01K 7/00, G01K 13/00

(54) **Indication of a solenoid temperature change**

(71) Applicant: Perkins Engines Company Limited, Eastfield Peterborough PE1 5NA (GB)
(72) Inventor: The designation of the inventor has not yet been filed
(74) Representative: Hatzmann, Martin

(57) **Abstract**

A method of indicating a temperature change of a solenoid driving a movable part of an actuator is disclosed. In applying the method a supply provided to the solenoid is sensed. Further, a chopping characteristic of the sensed supply is determined during a time period wherein a current supply is chopped between a first predetermined value and a second predetermined value. In addition, a chopping characteristic variation over time is detected and an indication signal is generated in dependence of a detected chopping characteristic variation exceeding a predetermined threshold.

## Description

### Technical Field

The present disclosure is directed to indication of a temperature change, more particularly, to indication of a temperature change of a solenoid driving a movable part of an actuator.

### Background

Solenoids are commonly used for driving a movable part of an actuator, such as a fluid injector in a combustion engine. To monitor operation of a solenoid, and in particular to prevent overheating, the temperature of the solenoid may be monitored. To monitor temperature of a solenoid, typically a temperature sensor may be employed. For example, a temperature sensor embodied as a separate component may be placed in or near the fluid injector for use during operation of the engine.

The use of a temperature sensor involves an additional component which increases complexity and cost. Further, a temperature sensor may occupy space in the engine compartment that may otherwise be available for other components.

European patent publication EP 1 903 201 discloses a valve control strategy and a controller for controlling the operation of a valve in an engine system. To circumvent the use of a temperature sensor, the controller is arranged for performing an indirect temperature measurement of a driven solenoid by measuring a boost voltage step value as well as a current value after a predetermined time interval during the start of the boost voltage.

The indication of a temperature change according to the present disclosure is basically directed to improving prior art systems.

### Summary of the Invention

One aspect of the present disclosure is directed to a method of indicating a temperature change of a solenoid driving a movable part of an actuator. The method may include sensing a supply provided to the solenoid and determining a chopping characteristic of the sensed supply during a time period wherein a current supply is chopped between a first predetermined value and a second predetermined value. Further, the method may include detecting a chopping characteristic variation over time, and generating an indication signal in dependence of a detected chopping characteristic variation exceeding a predetermined threshold.

Another aspect of the present disclosure is directed to a temperature change indicating system for indicating a temperature change of a solenoid driving a movable part of an actuator. The system may include a supply sensor configured to sense a supply provided to the solenoid. Further, the system may include a processor configured to determine a chopping characteristic of the sensed supply during a time period wherein a current supply is chopped between a first predetermined value and a second predetermined value, detect a chopping characteristic variation over time, and generate an indication signal in dependence of a detected chopping characteristic variation exceeding a predetermined threshold.

### Brief Description of the Drawings

Fig. 1 is a schematic cross-sectional illustration of an exemplary disclosed fluid injector;

Fig. 2 is a schematic diagram of an exemplary disclosed temperature indicating system;

Fig. 3 is a flow chart illustrating an exemplary method of indicating a temperature change; and

Fig. 4 is a diagram showing an exemplary controlled current supply of a solenoid.

### Detailed Description

A solenoid actuator may be an actuator including a solenoid for driving the actuator. Solenoid actuators are typically employed for performing a physical movement as a response to an electrical current. A solenoid is an electronic element configured to convert electrical current energy at least partly into a magnetic field. Thereto, a solenoid may include a coil for generating the magnetic field in response to an electrical current that flows to the coil. A solenoid actuator may further include an actuator part having magnetic material for performing a mechanical movement in dependence of any magnetic field generated by the coil. Movement of the actuator part may be used for actuating or driving a material element such as a switch or valve, e.g. for controlling physical entities such as a fuel flow in a fuel injector.

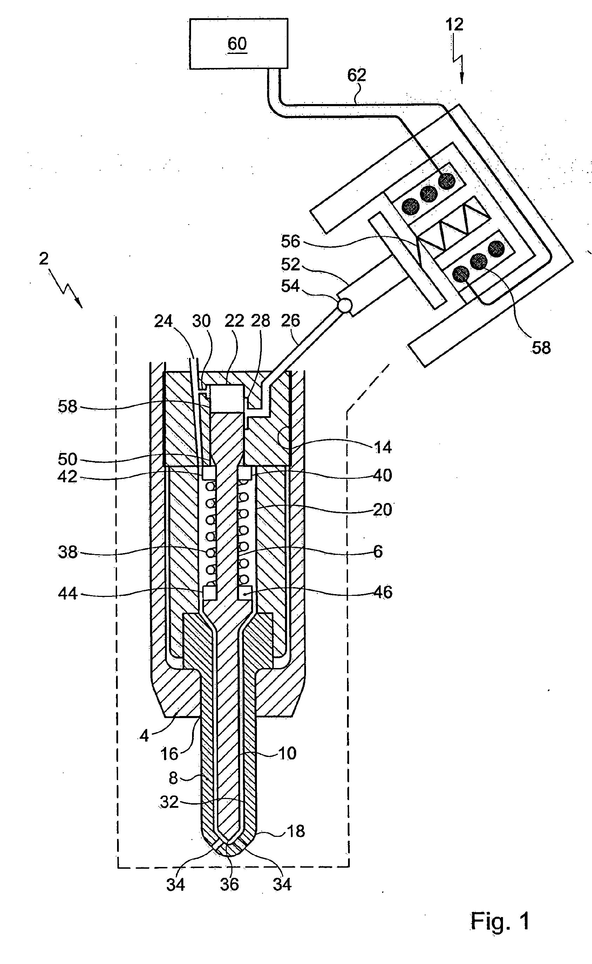

A solenoid actuator may thus be configured to control a fuel injector, as shown in Fig. 1. It is noted that the actuator may include a valve or a plunger or a lever as the actuator part that is movable between the first position and the second position. Further, as shown in Fig. 1, the actuator may be arranged in a hydraulic circuit. Further, the actuator may also be arranged in a pneumatic circuit.

Fig. 1 is a schematic cross-sectional illustration of an exemplary disclosed fluid injector 2. As illustrated, the injector 2 may include an injector body 4 housing a guide 6, a nozzle member 8, a needle valve element 10 and an actuator 12.

The injector body 4 may be a cylindrical member configured for assembly within a cylinder head of a combustion engine. The injector body 4 may have a central bore 14 for receiving guide 6 and nozzle member 8, and an opening 16 through which a tip end 18 of the nozzle member 8 may protrude. A sealing member such as, for example, an o-ring (not shown) may be disposed between the guide 6 and the nozzle member 8 to restrict fuel leakage from the fuel injector 2.

The guide 6 may also be a cylindrical member having a central bore 20 configured to receive the needle valve element 10, and a control chamber 22. The central bore 20 may act as a pressure chamber, holding pressurized fuel that is continuously supplied from a fuel supply passageway 24. During injection, pressurized fuel from a fuel line may be allowed to flow through the fuel supply passageway 24 and the central bore 20 to the nozzle member 8.

The control chamber 22 may be selectively drained of or supplied with pressurized fuel to control motion of the needle valve element 10. Specifically, a control passageway 26 may fluidly connect a port 28 of the control chamber 22 with the actuator 12. The control passageway 26 may be implemented as a 'Z' orifice. Further, the control chamber 22 may also be continuously supplied with pressurized fluid via a supply passageway 30 that is in communication with the fuel supply passageway 24. The supply passage 30 may be implemented as a 'A' orifice.

The nozzle member 8 may likewise embody a cylindrical member having a central bore 32 that is configured to receive the needle valve element 10. The nozzle member 8 may include one or more orifices 34 to allow the pressurized fuel from the central bore 20 into combustion chambers of the engine.

The needle valve element 10 may be an elongated cylindrical member that is slidingly disposed within the housing guide 6 and the nozzle member 8. The needle valve element 10 may be axially movable between a first position at which a tip end 36 of the needle valve element 10 blocks a flow of fuel through the orifices 34, and a second position at which the orifices 34 are open to allow a flow of fuel into the combustion chamber.

The needle valve element 10 may be normally biased towards the first position. In particular, as shown in Fig. 1, the fuel injector 2 may include a spring 38 disposed between a stop 40 of the guide 6 and a seating surface 44 of the needle valve element 10 to axially bias tip end 36 away from the orifice-blocking position. A first spacer 46 may be disposed between the spring 38 and the stop 40, and a second spacer 42 may be disposed between the spring 38 and the seating surface 44 to reduce wear of the components within the fuel injector 2.

The needle valve element 10 may have multiple driving hydraulic surfaces. In particular, the needle valve element 10 may include a hydraulic surface 48 tending to drive needle valve element 10 towards the first or orifice-blocking position when acted upon by pressurized fuel, oppositely to the bias of the spring 38, and a hydraulic surface 50 that tends to drive the needle valve element 10 in the opposite direction towards the second or orifice-opening position.

The actuator 12 may include an actuator part, in Fig. 1 implemented as a movable armature 52 operating a valve 54 opening and closing the 'Z' orifice 26. The armature 52 is slidingly movable between a first position wherein the valve 54 is closed, and a second position wherein the valve 54 is open. The actuator may further include a spring element 56 that is disposed for pushing the armature 52 towards the first position. The actuator 12 may also include a solenoid coil 58 that is fed via a supply electrical connection 62 by a control unit 60 for driving the additional needle 52 towards the second position, against the spring force of the spring element 56 so as to open the valve 54.

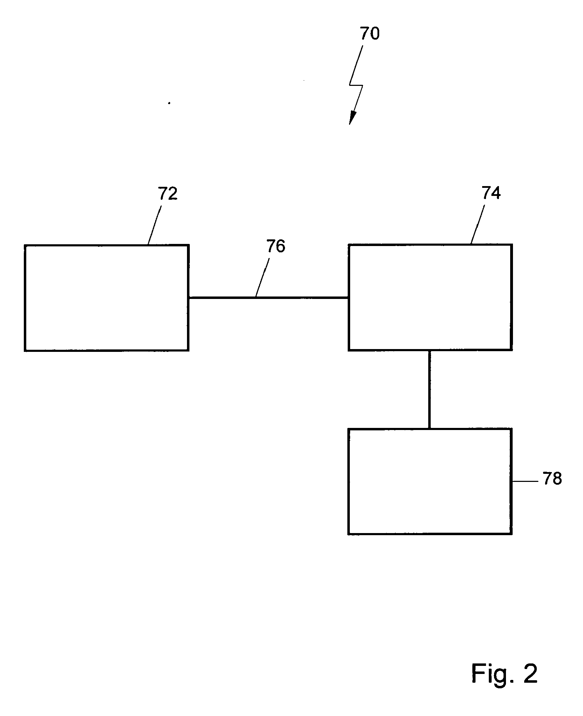

A temperature change indication system is a system that is configured to indicate a change in temperature e.g. to inform a person or a system that a temperature has changed. Basically, a temperature change indication system is configured to detect that a temperature has changed and to generate a signal including temperature change information in dependence of any temperature change detection. As such, a temperature change indication system, shown in Fig. 2, can be used to detect whether a temperature has changed in the solenoid driving the movable part of the actuator.

Fig. 2 is a schematic diagram of an exemplary disclosed temperature change indicating system 70. As illustrated in Fig. 2, the temperature indicating system 70 may include a supply sensor 72 configured to sense a supply provided to the solenoid 52. The supply sensor 72 may e.g. be implemented as a current sensor and/or as a voltage sensor. Further, the temperature change indicating system 70 may include a processor 74 configured to determine a chopping characteristic of the sensed supply during a time period wherein a current supply is chopped between a first predetermined value and a second predetermined value; detect a chopping characteristic variation over time; and generate an indication signal in dependence of a detected chopping characteristic variation exceeding a predetermined threshold. The supply sensor 72 and the processor 74 may be interconnected by means of a data connection 76. Optionally, the system 70 may further comprise a memory unit 78 for retrieving predetermined chopping characteristics indicative of a solenoid temperature. It is noted that the processor 74 and the control unit 60 may physically be integrated. However, the processor 74 and the control unit 60 can also be implemented separately. The processor may be implemented as a general purpose processor loaded with dedicated application software to perform the above-described operations. However, the processor can also at least partially be implemented in dedicated hardware, such as FPGA and/or DSP, for performing the above-described operations.

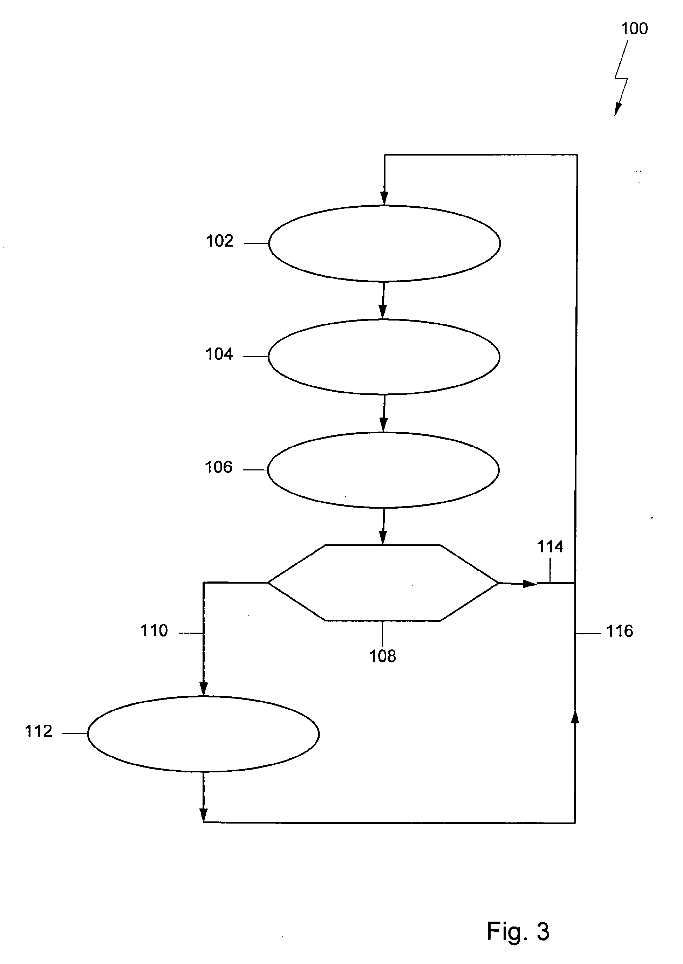

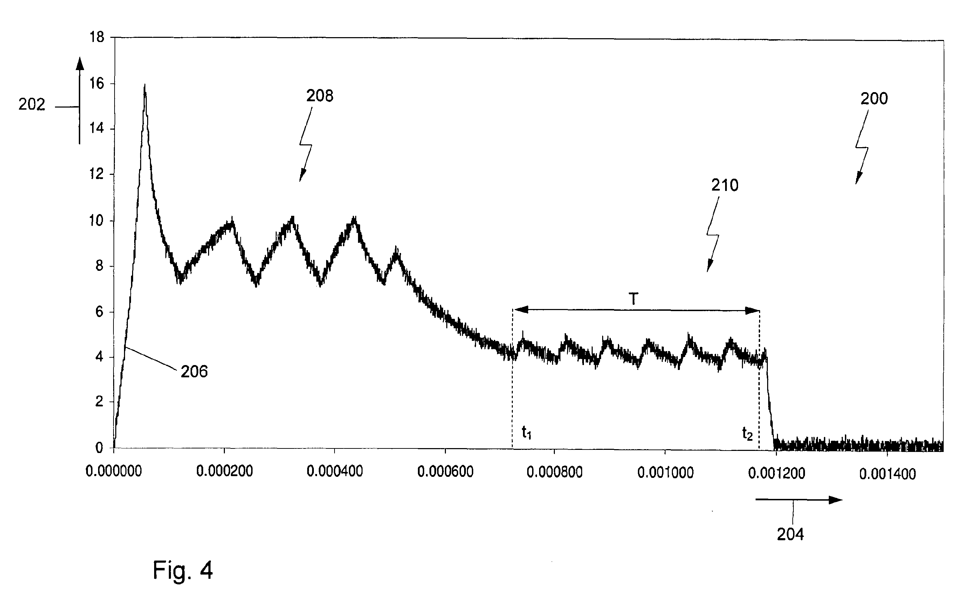

Figure 3 is a flow chart 100 illustrating an exemplary method of indicating a temperature change. The flow chart shows a number of steps in the exemplary method of indicating a temperature change. The chart shows step 102 in which a supply provided to the solenoid is sensed, step 104 in which a chopping characteristic of the sensed supply is determined, step 106 in which a chopping characteristic variation is detected, step 108 in which the flow of operations is splitted and step 112 in which an indication signal is generated. Figure 4 shall be discussed in more detail in the next section.

Figure 4 is a diagram showing an exemplary controlled current supply 206 which amplitude 202 is depicted as a function of time 204. Also Fig. 4 shall be discussed in more detail in the next section.

### Industrial Applicability

Indication a temperature change of a solenoid in accordance with the present disclosure may be applicable to any solenoid driving a movable part of an actuator, for example a movable part of a fuel injector in a combustion engine.

By providing an electrical current to the coil of a solenoid actuator, a magnetic field is generated. As a result of field interaction with the magnetic material included by the actuator part of the solenoid actuator, the actuator part moves from a first position to a second position. By moving the actuator part material element such as a switch or valve can be actuated or driven, e.g. for controlling physical entities such as a fuel flow in a fuel injector.

Depending on currents that are provided to the solenoid and depending on other physical conditions, such as an ambient temperature, the temperature of the solenoid may change. By retrieving temperature change information of the solenoid, useful information concerning the operation of the solenoid can be obtained, such as information whether the solenoid still functions or whether the solenoid is still performing according an expected behaviour. Further, such information may be used for counteracting undesired developments such as an overheated or damaged coil, e.g. by reducing or terminating a supply current provided to the solenoid coil. By providing an indication signal in dependence of any detected solenoid temperature change, the above-mentioned information can be obtained and can optionally be used as a basis for controlling the solenoid coil and/or other parameters to be controlled.

By determining a chopping characteristic of a sensed supply during a time period wherein a current supply is chopped between a first predetermined value and a second predetermined value, detecting a chopping characteristic variation over time and generating an indication signal in dependence of a detected chopping characteristic variation exceeding a predetermined threshold, an accurate and reliable temperature change indication of the solenoid can be obtained. The method of indicating a temperature change of a solenoid will now be explained in more detail using the exemplary embodiment shown in Figs. 1 and 2.

To initiate an injection event in a combustion chamber of the engine, the solenoid coil 58 may be energized and the armature 52 may move upwardly to the second position thereby opening the valve 54 and allowing fuel to exit via the 'Z' orifice 26. The pressure in the control chamber 22 may fall, the load on the needle valve element 10 may fall, the needle valve element 10 may lift upwardly to the orifice-opening position and the actual injection event may commence. During the injection event fuel may pass through the fuel supply passageway 24 via the central bore 20 to the orifices 34. Further, high pressure fuel may pass from the fuel supply passageway 24 via the 'A' orifice 30 and the 'Z' orifice 26 towards a cavity wherein the armature 52 is arranged. From said cavity the high pressure fuel may flow away to leak-off. orifice-blocking position

In order to terminate an injection event in the combustion chamber of the engine, the solenoid coil 58 is de-energized. Under spring action 56 the armature 52 may move to the first position closing the valve 54 so that fuel may enter the control chamber 22 via the 'A' orifice 30 being smaller than the 'Z' orifice 26. The fuel pressure in the control chamber 22 may rise so that the load on the needle valve element 10 may increase against the spring force of the spring 38 thereby pressing the needle valve element 10 downwardly towards the orifice-blocking position, thus closing the orifices 34.

The temperature change indication of the present disclosure may be performed as follows.
Figure 3 is a flow chart 100 illustrating an exemplary method of indicating a temperature change. The method may include a step of sensing 102 a supply provided to the solenoid. A current supply may be sensed by using the current sensor 72. Further, as an alternative, a voltage supply may be sensed by using a voltage sensor.

The method may further include a step 104 of determining a chopping characteristic of the sensed supply during a time period wherein a current supply is chopped between a first predetermined value and a second predetermined value.

Further, the method may include a step 106 of detecting a chopping characteristic variation over time.

Further, the method may include a step 108 of splitting into different flows of operations depending on the condition whether the detected chopping characteristic variation exceeds a predetermined threshold or not. If said variation does not exceed said threshold, the method may include the step 114 of returning to repeat with sensing step 102. However, the method may also stop without returning to the sensing step 102, e.g. after a predetermined number of executed steps 108. If said variation exceeds said threshold, the method may include a step 110 of moving to a step 112 of generating an indication signal. After the indication signal has been generated, the method similarly may include a step 116 of returning to repeat with the sensing step 102. Alternatively, the method may stop after the indication signal has been generated.

The steps 102-112 need not necessarily be performed in the order given here, and two or more steps may be performed at the same time. As an example, in a first embodiment, steps 102 and 104 are sequentially carried out a number of times before step 106 is performed. In yet another embodiment, steps 106, 108 and 112 can be performed simultaneously with steps 102 and 104.

In order to explain the determining step 104 and the detecting step 106 in more detail, reference is made to Fig. 4 being a diagram 200 showing an exemplary controlled current supply 206 of a solenoid. In the diagram 200, the amplitude 202 [A] of the current supply 206 is depicted as a function of time 204 [s]. During a first stage of driving the solenoid, a boost voltage step may be applied in order to cause the solenoid to drive the movable part of the actuator against the spring force from the first position corresponding with the closed state towards the second position corresponding to the open state. Said first stage is also called a pull-in phase. Typically, the current may reach a relatively high value at the end of the first stage. In a subsequent, second stage, also called a hold phase, the current supplied to the solenoid may be controlled between a first predetermined value and a second predetermined value, such that the solenoid may hold the movable part of the actuator in the second position corresponding to the open state. After the second stage has ended, the current supply that is provided to the solenoid can vanish. As a consequence, the movable part of the actuator may move under spring action from the second position towards the first position corresponding with the closed state. Then, a new cycle may be initiated e.g. by providing a boost voltage step.

In the shown diagram 200, said second stage includes a first time period 208 wherein the first predetermined value is approximately 7 A and wherein the second predetermined value is approximately 10 A, and a subsequent second time period 210 wherein the first predetermined value is approximately 4 A and wherein the second predetermined value is approximately 5 A. It is noted that also other first and second predetermined values can be set. It is further noted that said second stage may include more than two subsequent time periods with predetermined values for the current, e.g. three subsequent time periods having different predetermined values. However, the second stage may also include a single time period having fixed predetermined values for the controlled current. Further, in principle, the first and second stage may coincide such that the current that is provided to the solenoid is immediately controlled between the first predetermined value and the second predetermined value. Optionally, no voltage boost step is supplied to the solenoid.

In order to control the current provided to the solenoid between a first predetermined value and a second predetermined value, a supply voltage may be chopped so that in an alternating manner a substantially constant voltage and a substantially zero voltage is supplied. The solenoid current may increase when the substantially constant voltage is supplied while the solenoid current decreases when a substantially zero voltage is supplied. The chopped supply voltage may cause the current to exhibit a chopping characteristic such as a saw tooth behaviour that is clearly illustrated in Fig. 4.

The specific chopping characteristic depend on an actual resistance of the solenoid that in turn depends on the actual temperature of the solenoid. If the temperature of the solenoid is relatively low, also the solenoid resistance is relatively low, thus inducing the current to rapidly increase and decrease, respectively. On the other hand, if the temperature of the solenoid is relatively high, also the solenoid resistance is relatively high so that the current rise time and fall time, respectively, slow down. As a consequence, the chopping rate is a measure for the actual temperature of the solenoid.

The determining operation 104 of the method may include determining the above described chopping characteristic of the sensed supply during a time period wherein a current supply is chopped between a first predetermined value and a second predetermined value. During subsequent cycles wherein the solenoid drives the actuator part from the closed state into the open state and holds it in the open state, said chopping characteristic may be determined. The detecting operation 106 of the method may include detecting a chopping characteristic variation over time, meaning that a variation of the detected chopping characteristic is detected over said subsequent cycles of open states of the actuator part alternated by closed state periods wherein the solenoid is not driven.

If the solenoid temperature changes over time, also the solenoid resistance changes, thus causing the determined chopping characteristic to vary. If the variation of the determined chopping characteristic exceeds a predetermined threshold, the indication signal is generated during the generating operation 112 of the method. However, the method can also be implemented otherwise, e.g. by generating the indication signal if the determined chopping characteristic variation does not exceed a predetermined threshold.

The chopping characteristic may include a chopping frequency associated with the chopped current supply. As explained above, the chopping frequency is a measure for the solenoid temperature and is thus correlated therewith. Advantageously, the chopping frequency may be sensed both by a voltage sensor configured to sense the voltage that is supplied to the solenoid, as well as by a current sensor configured to sense a controlled current that is supplied to the solenoid. As a further advantage, it is noted that a chopping frequency may be determined relatively easily by detecting and adding maximum values, minimum values and/or time instants wherein the sensed supply crosses an average value.

In addition, by determining a chopping characteristic, such as a chopping frequency, that is representative for a relatively long time period wherein the current supply is chopped between a first predetermined value and a second predetermined value, a relatively accurate indication of a temperature change can be obtained as coherent information is added while noisy components are averaged to a reduced level. As an illustrating example, the chopping frequency can be determined over a time period T between time instants t₁ and t₂ marking a time period wherein the first and second predetermined value are fixed, see e.g. Figure 4. As the process of determining the chopping characteristic is substantially independent of an exact start time instant of a supply voltage step, the indicating method is further relatively robust and reliable.

In this context, it is noted that the chopping characteristic may as an alternative to a chopping frequency include other features, such as a mean rise and/or fall time of the current supply.

In another embodiment, the method may further include comparing the determined chopping characteristic with a set of predetermined chopping characteristics indicative of solenoid temperature. Said predetermined chopping characteristics may e.g. have been obtained via a data acquisition procedure wherein as additional data direct temperature measurements of the solenoid have been generated, such that a set of predetermined chopping characteristics is available, each of the predetermined chopping characteristics being associated with an indication of a solenoid temperature. The set of predetermined chopping characteristics as well as the associated solenoid temperature data may be available in the memory unit 78 of the temperature change indicating system 70 depicted in Figure 2.

Further, the method may include choosing a particular chopping characteristic of the set of predetermined chopping characteristics that has a predetermined difference range relative to the actually determined chopping characteristic. As an example, a particular characteristic is chosen that approaches the actual determined characteristic in some sense, e.g. by having a smallest frequency difference with the determined chopping frequency. Further, the method may include generating a temperature signal that is indicative of the temperature corresponding to the chosen particular chopping characteristic, thus providing indirectly an absolute temperature indication. Obviously, the determined chopping characteristic may also be implemented such that no comparison with predetermined chopping characteristics indicative of a solenoid temperature is performed, thus merely providing an indication signal in dependence of a detected chopping characteristic variation exceeding a predetermined threshold.

In yet another embodiment, the method may include modifying a control parameter in dependence of the generated indication signal and/or in dependence of the generated temperature signal. As a result, it may be counteracted that the solenoid is unnecessary exposed to unduly high current levels, for example due to a constant application of a battery voltage during periods when a boost circuitry is switched on, thereby counteracting damage of the solenoid coil. Further, during cold starting conditions, control voltage signals can thus be optimized in a consistent way. In addition, other control parameters can be modified, such as control parameters for controlling devices external to the solenoid. Such an exemplary control parameter is a fuel pressure in the fuel supply passageway 24 that may be adjusted in dependence of the generated indication signal and/or in dependence of the generated temperature signal.

It will be apparent to those skilled in the art that various modifications and variations may be made to the method of indicating a temperature change of the present disclosure without departing from the scope of the disclosure. Other embodiments will be apparent to those skilled in the art from consideration of the specification and practice of the method of indicating a temperature change disclosed herein. It is intended that the specification and examples be considered as exemplary only, with a true scope of the invention being indicated by the following claims and their equivalents.

## Claims

1. A method of indicating a temperature change of a solenoid driving a movable part of an actuator, the method comprising:
sensing a supply provided to the solenoid;
determining a chopping characteristic of the sensed supply during a time period wherein a current supply is chopped between a first predetermined value and a second predetermined value; detecting a chopping characteristic variation over time; and
generating an indication signal in dependence of a detected chopping characteristic variation exceeding a predetermined threshold.

2. The method of claim 1, further including:
comparing the determined chopping characteristic with a set of predetermined chopping characteristics indicative of solenoid temperature;
choosing a particular chopping characteristic of the set of predetermined chopping characteristics that has a predetermined difference range relative to the determined chopping characteristic; and
generating a temperature signal that is indicative of the temperature corresponding to the chosen particular chopping characteristic.

3. The method of claim 1, further including:
modifying a control parameter in dependence of the generated indication signal.

4. A temperature change indicating system for indicating a temperature change of a solenoid driving a movable part of an actuator, the system comprising:
a supply sensor configured to sense a supply provided to the solenoid; and
a processor configured to:
determine a chopping characteristic of the sensed supply during a time period wherein a current supply is chopped between a first predetermined value and
a second predetermined value;
detect a chopping characteristic variation over time; and
generate an indication signal in dependence of a detected chopping characteristic variation exceeding a predetermined threshold.

5. The temperature indicating system of claim 4, wherein the supply sensor includes a current sensor configured to sense a controlled current that is supplied to the solenoid.

6. The temperature indicating system of claim 4, wherein the chopping characteristic includes a chopping frequency associated with the chopped current supply.

7. The temperature indicating system of claim 4, wherein the processor is further configured to:
compare the determined chopping characteristic with a set of predetermined chopping characteristics indicative of solenoid temperature;
choose a particular chopping characteristic of the set of predetermined chopping characteristics that has a predetermined difference range relative to the determined chopping characteristic; and
generate a temperature signal that is indicative of the temperature corresponding to the chosen particular chopping characteristic.

8. The temperature indicating system of claim 4, wherein the processor is further configured to:
modify a control parameter in dependence of the generated indication signal.

9. A solenoid actuator, comprising:
an actuator part that is movable between a first position and a second position;
a solenoid configured to drive said actuator part in a particular position;
a controller being provided with a supply configured to feed the solenoid by a current controlled voltage;
a supply sensor configured to sense the supply provided to the solenoid; and
a processor configured to:
determine a chopping characteristic of the sensed supply during a time period wherein the current supply is chopped between a first predetermined value and a second predetermined value; detect a chopping characteristic variation over time; and
generate an indication signal in dependence of a detected chopping characteristic variation exceeding a predetermined threshold.

10. The solenoid actuator of claim 9, wherein the actuator is configured to control a fuel injector.

11. The solenoid actuator of claim 9, wherein the actuator includes a valve or a plunger or a lever.

12. The solenoid actuator of claim 9, wherein the actuator is arranged in a hydraulic or pneumatic circuit.

13. A computer program product for indicating a temperature change of a solenoid driving a movable part of an actuator, the computer program product comprising instructions for causing a processor to perform a method comprising:
determining a chopping characteristic of a sensed solenoid supply during a time period wherein the current supply is chopped between a first predetermined value and a second predetermined value; detecting a chopping characteristic variation over time; and
generating an indication signal in dependence of a detected chopping characteristic variation exceeding a predetermined threshold.
